# EUROPÄISCHE PATENTSCHRIFT

(11) **EP 3 793 921 B1**
(45) Veröffentlichungstag und Bekanntmachung des Hinweises auf die Patenterteilung: **09.03.2022**
(21) Anmeldenummer: 19725159.8
(22) Anmeldetag: 17.05.2019
(51) Int. Cl.: B65G 49/06, B60P 3/00, B62B 3/10, B65D 85/48

(54) **SPEICHEREINRICHTUNG ZUM SPEICHERN VON GLASTAFELN, VORZUGSWEISE VERBUNDGLASTAFELN ODER EINSCHEIBENSICHERHEITSGLASTAFELN**
STORAGE DEVICE FOR STORING GLASS PANES, PREFERABLY LAMINATED GLASS PANES OR TEMPERED GLASS PANES
DISPOSITIF DE STOCKAGE DESTINÉ À STOCKER DES PLAQUES DE VERRE, DE PRÉFÉRENCE DES PLAQUES DE VERRE FEUILLETÉ OU DES PLAQUES DE VERRE DE SÉCURITÉ TREMPÉ

(30) Priorität: 17.05.2018 DE 102018207812
(43) Veröffentlichungstag der Anmeldung: 24.03.2021
(73) Patentinhaber: HEGLA GmbH & Co. KG, 37688 Beverungen (DE)
(72) Erfinder: HÖTGER, Bernhard, 37397 Lauenförde (DE); JOST, Martin, 37688 Beverungen (DE)
(74) Vertreter: Dr. Solf & Zapf Patent- und Rechtsanwalts PartG mbB
(86) Internationale Anmeldenummer: PCT/EP2019/062854
(87) Internationale Veröffentlichungsnummer: WO 2019/219936

(56) Entgegenhaltungen:
- EP-A1- 1 526 098
- EP-A1- 2 426 072
- EP-B1- 2 426 072
- DE-A1-102013 104 883
- US-A1- 2012 175 323

## Beschreibung

Die vorliegende Erfindung betrifft eine Speichereinrichtung, insbesondere einen Fächerwagen, zum Speichern von Glastafeln, bevorzugt von Verbundglastafeln oder ESG-Tafeln.

Als Flachglas wird jedes Glas in Form von Glastafeln bezeichnet, unabhängig vom angewandten Herstellungsverfahren.

Bei Verbundglastafeln handelt es sich um ein Laminat aus mindestens zwei einzelnen Glasscheiben, die jeweils mittels einer klebfähigen Zwischenschicht aus Kunststoff, insbesondere durch eine hochreißfeste, zähelastische, thermoplastische Folie, miteinander verbunden sind.

Einscheiben-Sicherheitsglas (ESG) besteht aus einer einzigen, speziell wärmebehandelten Glasscheibe. Die Glasscheibe wird auf Temperaturen oberhalb ihrer Transformationstemperatur erhitzt und danach schlagartig wieder abgekühlt, so dass eine Vorspannung in der Glasscheibe entsteht. Vorzugsweise erfolgt die Wärmebehandlung gemäß DIN EN 12150-1:2015-12. Einscheiben-Sicherheitsglas hat aufgrund der Vorspannung eine erhöhte Stoß- und Schlagfestigkeit im Vergleich zu normalen Flachglastafeln.

Um Glasscheiben mit Filter-, Spiegel-, Heizfunktionen oder sonstigen Funktionen zu versehen, können die unterschiedlichsten, ein- oder mehrlagigen Funktionsbeschichtungen auf die Glasscheiben aufgebracht werden.

Für ihre spätere Verwendung müssen die Glastafeln in der Regel zugeschnitten werden. Dazu werden insbesondere Glasrohtafeln in einzelne Glastafelzuschnitte zerteilt. Dies erfolgt in an sich bekannten Schneidanlagen. Nach dem Schneiden werden die Glastafelzuschnitte bzw. die geschnittenen Glastafeln vorzugsweise in einer Weiterbearbeitungsanlage, beispielsweise einer Isolierglaslinie oder einer Tempervorrichtung, weiter bearbeitet.

Während des gesamten Herstellprozesses, insbesondere vor und/oder nach dem Schneiden werden die Glastafeln in an sich bekannter Weise sortiert und zwischengespeichert. Das Zwischenspeichern erfolgt in entsprechenden Speichereinrichtungen. In der Regel unterscheidet man zwischen vertikalen und horizontalen Speichereinrichtungen. In den horizontalen Speichereinrichtungen werden die Glastafeln liegend bzw. horizontal gespeichert. In den vertikalen Speichereinrichtungen werden die Glastafeln aufrecht, das heißt vertikal oder etwas zur Vertikalen geneigt, gespeichert.

Bei der erfindungsgemäßen Speichereinrichtung handelt es sich in diesem Sinne um eine vertikale Speichereinrichtung.

Bei den Speichereinrichtungen kann sich beispielsweise um stationäre Speichereinrichtungen oder verfahrbare Speichereinrichtungen, insbesondere Fächerwagen, handeln.

Aus der DE 10 2004 053 600 A1 geht beispielsweise ein Fächerwagen hervor, in dem Glastafeln vertikal gespeichert werden. Der Fächerwagen weist hierzu mehrere Fächer auf, die durch vertikale Drähte unterteilt werden. Ein Fach wird dabei jeweils durch mehrere hintereinander angeordnete Drähte von dem benachbarten Fach abgegrenzt.

Beim Einführen von Verbundglas- und auch ESG-Tafeln besteht nun das Problem, dass diese herstellungsbedingt nicht immer vollständig ebenflächig sind, sondern eine geringe Krümmung aufweisen können. Aufgrund dessen kommt es vor, dass eine solche Glastafel am vorderen Einschubende der Speichereinrichtung in einem ersten Fach angeordnet ist und am hinteren Ende der Speichereinrichtung in das benachbarte Fach springt. Sie verliert also beim Einschieben in das Fach die Spur.

Die DE 10 2013 104 883 A1 offenbart einen Ständer zum Speichern von plattenförmigen Gegenständen, z. B. Glasplatten, der einen Beladeraum und mehrere Halteabschnitte aufweist. Die Halteabschnitte unterteilen den Beladeraum in einzelne, in eine Breitenrichtung des Ständers benachbarte und zueinander parallele Fächer zur Aufnahme jeweils eines plattenförmigen Elements. Die Halteabschnitte weisen einen rechteckigen Querschnitt auf. Zudem sind sie vertikal ausgerichtet. Der Ständer weist zudem Stützbalken und Diagonalstreben auf, die ebenfalls einen rechteckigen Querschnitt aufweisen.

Die EP 2 426 072 A1 offenbart eine Speichereinrichtung zum Speichern von Glastafeln mit Rahmen. Jeder Rahmen weist vertikale und horizontale Profile auf, welche miteinander verbunden sind, um eine feste Struktur zu bilden. Zudem können die Rahmen zur Seite hin geneigt sein. Die horizontalen Profile sind zudem unterbrochen. Sie erstrecken sich nicht durchgehend über die gesamte Länge der Speichereinrichtung. An der Einschubseite stehen die horizontalen Profile zudem über die vertikalen Profile über.

Aus der US 2012/0175323 A1 geht eine Speicher- bzw. Transporteinrichtung zum Transport von Solarspiegelscheiben hervor. Die Speichereinrichtung wird von oben beladen. Sie weist mehrere horizontale Streben auf, welche den Beladeraum in in eine Breitenrichtung der Speichereinrichtung zueinander benachbarte parallele Fächer unterteilt. Die horizontalen Streben sind unten mittels länglichen Balken und an ihrem oberen Ende mittels Winkeleisen und Streifen miteinander verbunden. Des Weiteren weist die Speichereinrichtung mehrere, die Fächer zusätzlich seitlich begrenzende vertikale Streben auf. Die horizontalen Streben der Gestelle und auch die vertikalen Balken weisen einen rechteckigen Querschnitt auf.

Die EP 1 526 098 A1 offenbart eine Speichereinrichtung zum Speichern von Glastafeln, welche einen Beladeraum und mehrere, in eine Breitenrichtung der Speichereinrichtung zueinander benachbarte und zueinander parallel Fächer zur Aufnahme jeweils einer Glastafel aufweist. Die Speichereinrichtung weist auch Fächerrahmen mit mehreren vertikalen Stäben und mehreren horizontalen Stäben auf. Die Beladerichtung ist entweder vertikal von oben nach unten oder horizontal und senkrecht zu den Schienen. Die Fächerrahmen sind somit in eine zur Beladerichtung senkrechte Richtung, nämlich in eine Richtung parallel zu den Schienen hintereinander angeordnet. Der Querschnitt der Stäbe der Fächerrahmen ist zudem rechteckig.

Aufgabe der vorliegenden Erfindung ist die Bereitstellung einer Speichereinrichtung zum Speichern von Glastafeln, vorzugsweise von Verbundglas- und/oder ESG-Tafeln, in der auch leicht gekrümmte Glastafeln, vorzugsweise Verbundglas- und/oder ESG-Tafeln, problemlos gespeichert werden können.

Weitere Aufgabe ist die Bereitstellung einer Glasverarbeitungsanlage zum Verarbeiten von Glastafeln, vorzugsweise von Verbundglas- und/oder ESG-Tafeln, mit einer derartigen Speichereinrichtung. Bevorzugt handelt es sich bei der Glasverarbeitungsanlage um eine Schneidanlage zum Schneiden von Glastafeln, bevorzugt Verbundglastafeln, in einzelne Glastafelzuschnitte, um diese automatisch einer Weiterverarbeitung zuzuführen.

Diese Aufgabe wird durch eine Speichereinrichtung gemäß Anspruch 1 und eine Glasverarbeitungsanlage gemäß Anspruch 14 gelöst. Zudem wird in Anspruch 15 eine erfindungsgemäße Verwendung der Speichereinrichtung angegeben. Vorteilhafte Weiterbildungen der Erfindung werden in den sich anschließenden Unteransprüchen gekennzeichnet.

Im Folgenden wird die Erfindung anhand einer Zeichnung beispielhaft näher erläutert. Es zeigen:
- Figur 1:: Eine perspektivische Ansicht eines erfindungsgemäßen Fächerwagens
- Figur 2:: Eine Seitenansicht des Fächerwagens
- Figur 3:: Vergrößert einen beladeseitigen Bereich eines Fächerwagens mit ersten und zweiten Fachteilerstangen
- Figur 4:: Einen Schnitt entlang der Linie A-A in Figur 6
- Figur 5:: Eine perspektivische Explosionsdarstellung einer ersten Fachteilerstange, zwei zweiten Fachteilerstangen und eines Kunststoffclips
- Figur 6:: Schematisch eine explosionsartige Seitenansicht von ersten und zweiten Fachteilerstangen

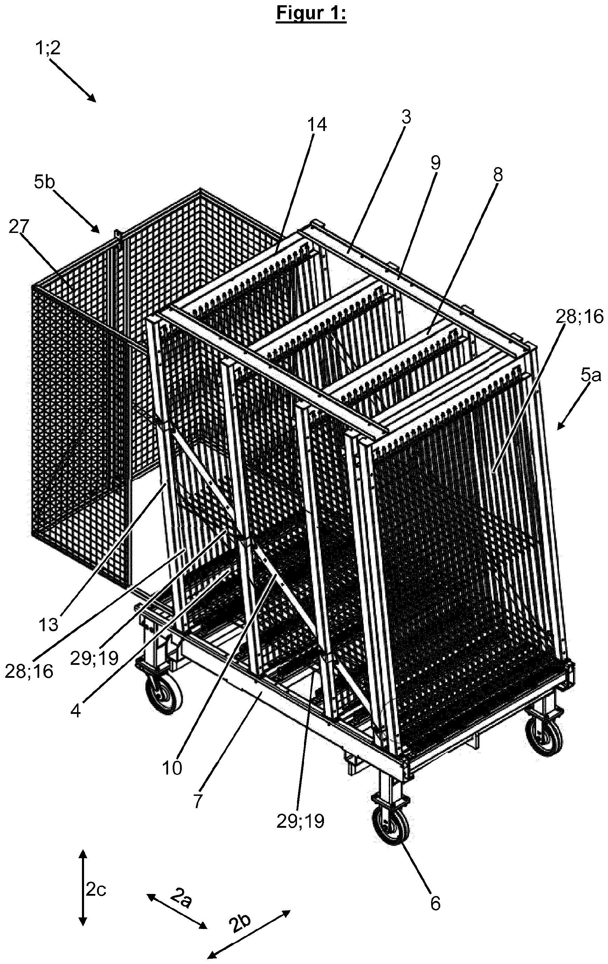

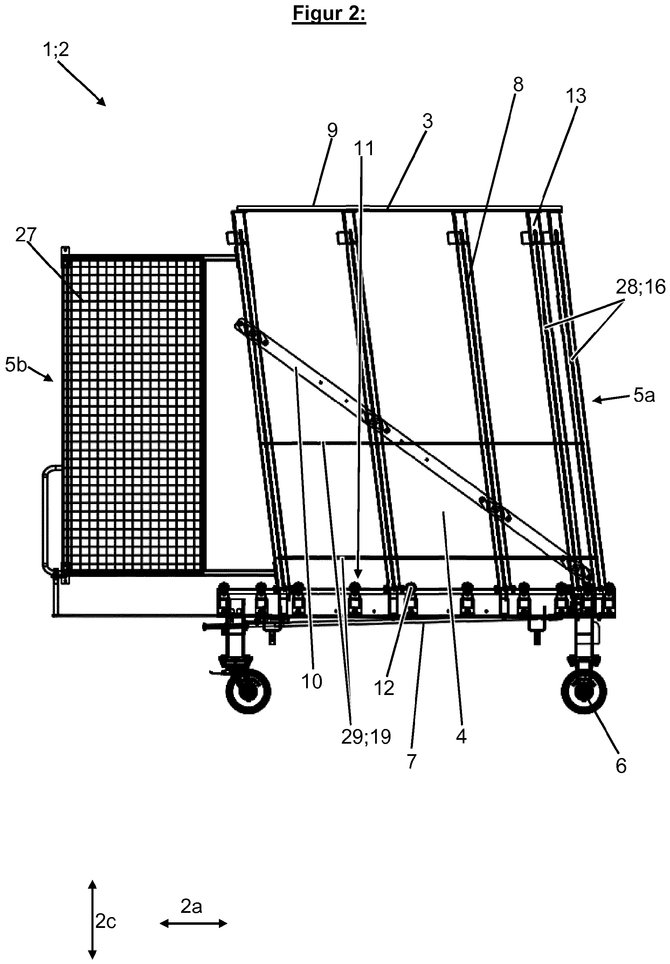

Bei der erfindungsgemäßen Speichereinrichtung 1 (Fig. 1, 2) handelt es sich vorzugsweise um einen Fächerwagen 2.

Der Fächerwagen 2 weist ein Grundgestell 3 auf, welches einen Speicher- bzw. Beladeraum 4 umgibt.

Des Weiteren weist der Fächerwagen 2 eine horizontale Längsrichtung bzw. Beladerichtung 2a, eine dazu senkrechte, horizontale Breitenrichtung 2b und eine zur Beladerichtung 2a und zur Breitenrichtung 2b senkrechte Höhenrichtung 2c auf.

Zudem weist der Fächerwagen 2 eine Beladeseite 5a und eine dieser in Beladerichtung 2a gegenüberliegende Rückseite 5b auf. Von der Beladeseite 5a her werden die Glastafeln in Beladerichtung 2a in den Fächerwagen 2 eingeschoben.

Des Weiteren weist der Fächerwagen 2, bevorzugt vier, Räder 6 zum Verfahren des Fächerwagens 2 auf dem Untergrund auf. Die Räder 6 sind unterseitig am Grundgestell 3 befestigt.

Außerdem weist der Fächerwagen 2 zudem vorzugsweise einen Schutzzaun 27 auf, der an der Rückseite 5b des Fächerwagens 2 angeordnet ist. Der Schutzzaun 27 dient dazu, eine Verletzung der Bedienperson an den, oft scharfkantigen, Glastafeln zu vermeiden.

Das Grundgestell 3 des Fächerwagens 2 weist einen Bodenrahmen 7, mehrere, bevorzugt quaderförmige, Fächerrahmen 8, zwei obere Streben 9 und vorzugsweise zwei Seitenstreben 10 auf.

Der Bodenrahmen 7 weist in an sich bekannter Weise vorzugsweise eine Rollenbahn 11 mit mehreren, in die Beladerichtung 2a hintereinander angeordneten Rollen 12 auf. Die Rollen 12 sind um zur Breitenrichtung 2b parallele Drehachsen drehbar. Anstelle der Rollenbahn 11 können auch andere Fördermittel, zum Beispiel Transportbänder, vorhanden sein.

Die Fächerrahmen 8 sind in Beladerichtung 2a hintereinander und voneinander beabstandet angeordnet. Dabei sind die Fächerrahmen 8 vorzugsweise mittels der beiden oberen Streben 9 und der beiden Seitenstreben 10 miteinander verbunden. Zudem sind die Fächerrahmen 8 auf dem Bodenrahmen 7 angeordnet und fest mit dem Bodenrahmen 7 verbunden.

Die Fächerrahmen 8 weisen vorzugsweise jeweils zwei Rahmenlängsbalken 13 und zwei Rahmenquerbalken 14 auf. Die Rahmenquerbalken 14 erstrecken sich insbesondere parallel zur Breitenrichtung 2b. Die aufrechten Rahmenlängsbalken 13 erstrecken sich vertikal oder im Wesentlichen vertikal. Die Rahmenlängsbalken 13 sind über die Rahmenquerbalken 14 miteinander verbunden. Im Wesentlichen vertikal, meint, dass die Rahmenlängsbalken 13 zur Vertikalen bzw. zur Höhenrichtung 2c geneigt sein können. Sie können dabei zur Rückseite 5b hin oder von dieser weg geneigt sein und/oder zu einer Seite des Fächerwagens 2 hin geneigt sein.

Zur Rückseite 5b oder von dieser weg geneigt meinte eine Neigung in eine zur Beladerichtung 2a parallele Richtung bzw. eine Neigung bzw. Drehung bzw. Auslenkung um eine zur Breitenrichtung 2b parallele Achse.

Zur Seite geneigt meinte eine Neigung in eine zur Breitenrichtung 2b parallele Richtung bzw. eine Neigung bzw. Drehung bzw. Auslenkung um eine zur Beladerichtung 2a parallele Achse.

Dabei beträgt der Neigungswinkel zur Rückseite 5b hin oder von dieser weg vorzugsweise ≤ 45°, bevorzugt ≤ 20°, besonders bevorzugt ≤ 10°.

Der Neigungswinkel zu einer Seite des Fächerwagens 2 hin beträgt vorzugsweise ≤ 7°, bevorzugt ≤ 5°, besonders bevorzugt ≤ 2°.

Die Fächerrahmen 8 dienen zur Unterteilung des Beladeraumes 4 in einzelne, in Breitenrichtung 2b zueinander benachbarte, Fächer 15. Die zueinander benachbarten und zueinander parallelen Fächer 15 sind zur Beladeseite 5a hin und vorzugsweise auch zur Rückseite 5b hin offen.

Zur Unterteilung der Fächer 15 weisen die Fächerrahmen 8 dabei jeweils mehrere erste, zueinander parallele, Fachbegrenzungsstangen bzw. -stäbe bzw. Fachteilerstangen - bzw. stäbe 15 auf, die in Breitenrichtung 2b zueinander benachbart und voneinander beabstandet sind.

Die ersten Fachteilerstangen 16 sind aufrecht und im Wesentlichen vertikal. Vorzugsweise erstrecken sie sich parallel zu den Rahmenlängsbalken 13.

Im Wesentlichen vertikal meint, wie oben bereits beschrieben, dass die ersten Fachteilerstangen 16 geringfügig zur Vertikalen bzw. zur Höhenrichtung 2c geneigt sind. Erfindungsgemäß sind sie dabei zur Rückseite 5b hin oder von dieser weg geneigt (erster Neigungswinkel α). Sie können zudem auch zusätzlich zu einer Seite des Fächerwagens 2 hin geneigt sein (zweiter Neigungswinkel). Der erste Neigungswinkel α ist also der Winkel zwischen der Vertikalen und der Fachteilerstange 16 projiziert auf eine zur Breitenrichtung 2b senkrechte Ebene bzw. der Winkel, um den die Fachteilerstange 16 um eine zur Breitenrichtung 2b parallele Drehachse relativ zur Vertikalen ausgelenkt bzw. geneigt ist. Der zweite Neigungswinkel ist der Winkel zwischen der Vertikalen und der Fachteilerstange 16 projiziert auf eine zur Beladerichtung 2a senkrechte Ebene bzw. der Winkel, um den die Fachteilerstange 16 um eine zur Beladerichtung 2a parallele Drehachse relativ zur Vertikalen ausgelenkt bzw. geneigt ist.

Dabei beträgt der erste Neigungswinkel α vorzugsweise ≤ 45°, bevorzugt ≤ 20°, besonders bevorzugt ≤ 10°.

Der zweite Neigungswinkel beträgt vorzugsweise ≤ 7°, bevorzugt ≤ 5°, besonders bevorzugt ≤ 2°.

Zudem erstrecken sich die ersten Fachteilerstangen 16 von dem unteren zum oberen Rahmenquerbalken 14 hin. Vorzugsweise sind sie mit den beiden Rahmenquerbalken 14 fest verbunden. Des Weiteren sind sie zwischen den beiden Rahmenlängsbalken 13 angeordnet.

Dabei sind die ersten Fachteilerstangen 16 der einzelnen hintereinander angeordneten Fächerrahmen 8 derart in Beladerichtung 2a zueinander fluchtend angeordnet, dass sie die einzelnen Fächer 15 seitlich, also in Breitenrichtung 2b, begrenzen. Jede erste Fachteilerstange 16 eines Fächerrahmens 8 begrenzt somit mit den dazu in Beladerichtung 2a fluchtend angeordneten ersten Fachteilerstangen 16 der anderen Fächerrahmen 8 jeweils einseitig ein Fach 15.

Bzw. jede erste Fachteilerstange 16 eines Fächerrahmens 8 bildet mit den dazu in Beladerichtung 2a zueinander fluchtend angeordneten ersten Fachteilerstangen 16 der anderen Fächerrahmen 8 eine erste Stangenreihe 17. Und jede erste Stangenreihe 17 begrenzt jeweils einseitig ein Fach 15.

Die ersten Fachteilerstangen 16 bestehen dabei vorzugsweise aus Metall, bevorzugt aus Edelstahl. Des Weiteren handelt es sich vorzugsweise um Rohre.

Vorzugsweise sind zudem drehbare Kunststoffröhrchen 18 vorhanden, die zur Vermeidung von Kratzern an den Glastafeln dienen, worauf weiter unten näher eingegangen wird. Die Kunststoffröhrchen 18 sind um die Fachteilerstangen 16 herum angeordnet und um diese herum frei drehbar.

Erfindungsgemäß weist der Fächerwagen 2 zudem mehrere zweite Fachbegrenzungsstangen bzw. -stäbe bzw. Fachteilerstangen bzw. -stäbe 19 auf. Die zweiten Fachteilerstangen 19 erstrecken sich jeweils zwischen den ersten Fachteilerstangen 16 einer ersten Stangenreihe 17.

Sie erstrecken sich somit von der einen ersten Fachteilerstange 16 zu der dazu in Beladerichtung 2a direkt benachbart und fluchtend angeordneten anderen ersten Fachteilerstange 16 derselben Stangenreihe 17.

Zudem sind die zweiten Fachteilerstangen 19 insbesondere zwischen dem unteren Rahmenquerbalken 14 und dem oberen Rahmenquerbalken 14 angeordnet sind und von dem unteren Rahmenquerbalken 14 und dem oberen Rahmenquerbalken (14) beabstandet.

Vorzugsweise erstrecken sich die zweiten Fachteilerstangen 19 zudem horizontal bzw. parallel zur Beladerichtung 2a. Sie können sich aber auch schräg zur Beladerichtung 2a bzw. zur Horizontalen erstrecken. Sie sind aber nicht parallel zu den ersten Fachteilerstangen 16.

Sind die zweiten Fachteilerstangen 19 nicht horizontal, sind sie zur Beladerichtung 2a bzw. zur Horizontalen um einen dritten Neigungswinkel in Höhenrichtung 2c ausgelenkt bzw. geneigt. Der dritte Neigungswinkel ist also der Winkel zwischen der Horizontalen bzw. der Beladerichtung 2a und der zweiten Fachteilerstange 19 projiziert auf eine zur Breitenrichtung 2b senkrechte Ebene bzw. der Winkel, um den die zweiten Fachteilerstange 19 um eine zur Breitenrichtung 2b parallele Drehachse relativ zur Horizontalen bzw. zur Beladerichtung 2a ausgelenkt bzw. geneigt ist.

Der dritte Neigungswinkel beträgt vorzugsweise ≤ 5°, bevorzugt ≤ 3°, besonders bevorzugt ≤ 1°.

Wenn die ersten Fachteilerstangen 16 zur Seite geneigt sind, sind die zweiten Fachteilerstangen 19 zwangsläufig ebenfalls in Richtung der Breitenrichtung 2b geneigt bzw. um eine zur Vertikalen parallele Drehachse entsprechend geneigt bzw. ausgelenkt.

Des Weiteren sind die zweiten Fachteilerstangen 19, die zwischen denselben beiden Fächerrahmen 8 angeordnet sind, vorzugsweise in Breitenrichtung 2b zueinander benachbart und zueinander fluchtend angeordnet. Sie bilden eine zweite, insbesondere horizontale, Stangenreihe 19. Die zweiten Fachteilerstangen 19 können aber auch zueinander höhenversetzt sein.

Die zweiten Fachteilerstangen 19 bestehen dabei ebenfalls vorzugsweise aus Metall, bevorzugt aus Edelstahl. Des Weiteren handelt es sich vorzugsweise um Rohre.

Die zweiten Fachteilerstangen 19 dienen erfindungsgemäß zur zusätzlichen seitlichen Begrenzung der Fächer 15 und zur Führung und Zentrierung der Glastafeln beim Einschieben in das jeweilige Fach 15.

Dabei weisen die zweiten Fachteilerstangen 19 vorzugsweise einen geringeren Außendurchmesser als die Kunststoffröhrchen 18 auf. Dies dient dazu, eine Beschädigung der Oberflächen der Glastafeln zu vermeiden.

Die Fachbreite der Fächer 15 beträgt zudem vorzugsweise 8 bis 30 mm, bevorzugt 13 bis 24 mm. Damit weisen die Fächer 15 des erfindungsgemäßen Fächerwagens 2 eine etwas größere Fachbreite als die Fächer der bekannten Speichereinrichtungen auf. Dadurch wird zusätzlich ein problemloses Einführen der geringfügig gewölbten Glastafeln in die Fächer 15 gewährleistet.

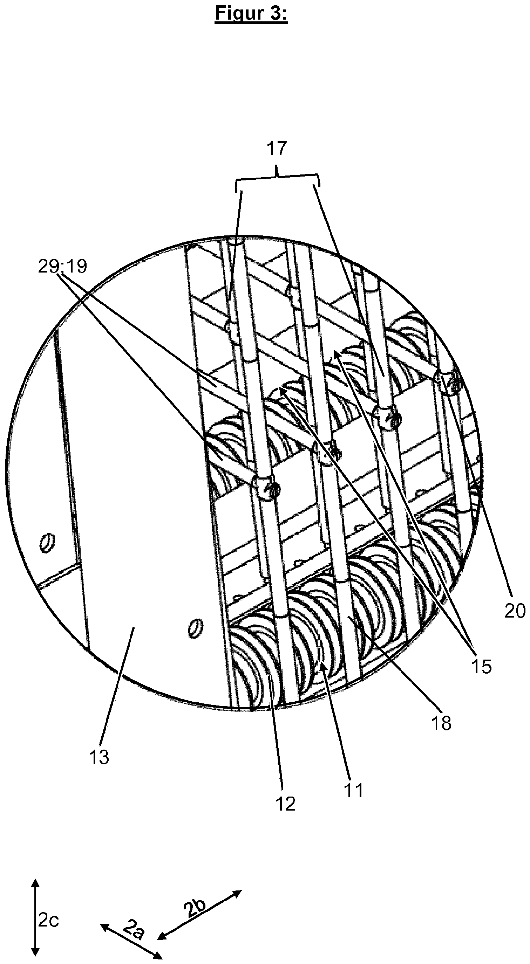

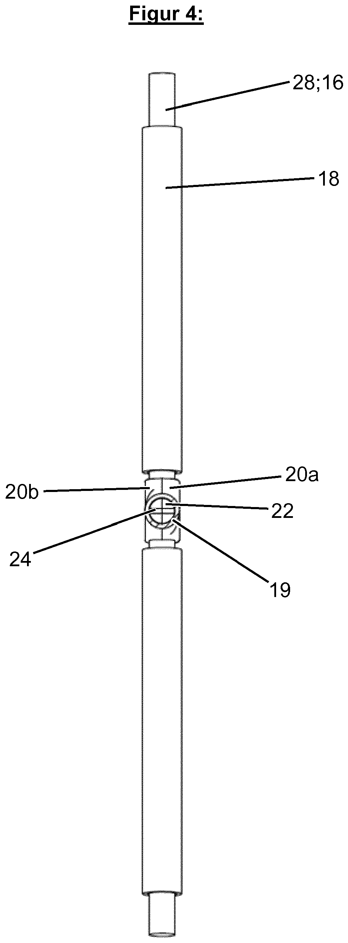

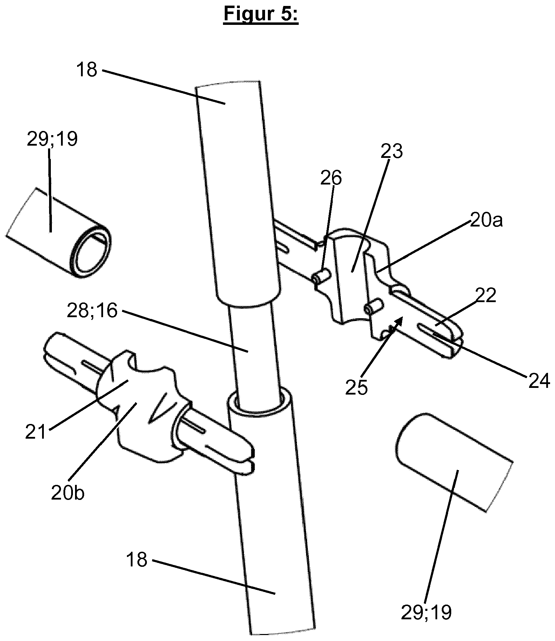

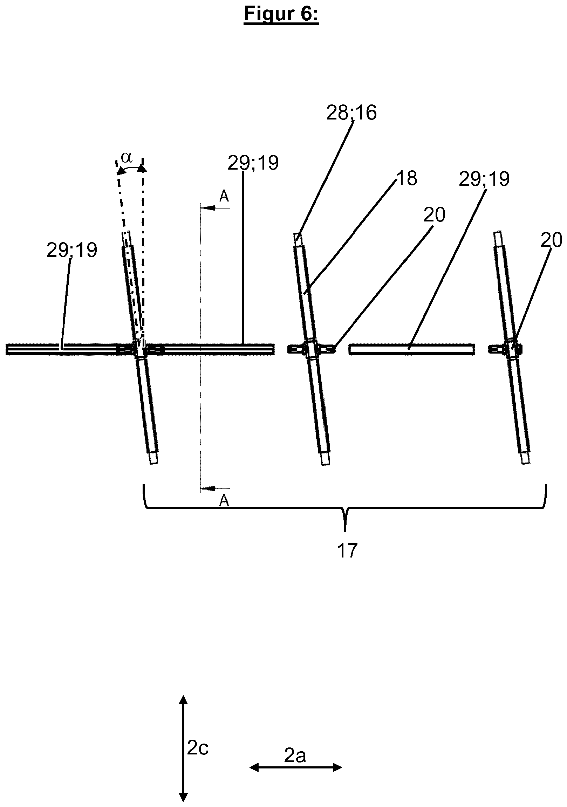

Vorzugsweise sind die zweiten Fachteilerstangen 19 zudem lösbar mit den ersten Fachteilerstangen 16 verbunden. Dazu sind vorzugsweise Kunststoffclipse 20 (Fig. 3-7) vorhanden.

Die Kunststoffclipse 20 sind jeweils zweiteilig ausgebildet und weisen eine erste und eine zweite Clipshälfte 20a;b auf

Die Clipshälften 20a;b weisen jeweils ein Mittelteil 21 sowie zwei davon beidseits abstehende Zapfen 22 auf.

Das Mittelteil 21 weist jeweils eine durchgehende Stangenaufnahmenut 23 zur Aufnahme der ersten Fachteilerstange 16 auf. Infolgedessen weist die Stangenaufnahmenut 23 einen halbrunden Querschnitt auf. Dabei entspricht der Durchmesser des Querschnitts vorzugsweise dem Außendurchmesser der ersten Fachteilerstangen 16.

Die beiden Zapfen 22 dienen zum Einstecken in jeweils eine der, zumindest endseitig, rohrförmigen zweiten Fachteilerstangen 18. Sie weisen deshalb ebenfalls einen halbrunden Querschnitt auf, wobei der Außendurchmesser des Querschnitts im Wesentlichen dem Innendurchmesser der zweiten Fachteilerstangen 18 entspricht. Zudem weisen die Zapfen 22 vorzugsweise einen Schlitz 24 auf, der sich von einem freien Ende der Zapfen 22 in diese hinein erstreckt.

Die Clipshälften 20a;b der Kunststoffclipse 20, welche an der Beladeseite 5a und der Rückseite 5b des Fächerwagens 2 angeordnet sind, weisen vorzugsweise lediglich jeweils einen Zapfen 22 auf.

Die beiden Clipshälften 20a;b weisen zudem jeweils eine, insbesondere ebenflächige, Anlagenfläche 25 auf, die zur Anlage an der jeweils anderen Clipshälfte 20a;b dient. Die eine der beiden Clipshälften 20a;b weist zudem zwei von der Anlagefläche 25 abstehende Stifte 26 auf und die andere der beiden Clipshälften 20a;b weist zwei dazu korrespondierende Ausnehmungen (nicht dargestellt) auf.

Zum Verbinden der zweiten Fachteilerstangen 18 mit den ersten Fachteilerstangen 16 werden die beiden Clipshälften 20a;b mit den Stangenaufnahmenuten 23 um jeweils eine der ersten Fachteilerstangen 16 herum angeordnet und die Stifte 26 in die Ausnehmungen eingesteckt. Dadurch werden die Clipshälften 20a;b miteinander verbunden und die Kunststoffclipse 20 mit den ersten Fachteilerstangen 16 verklemmt. Dann wird jeweils eine der zweiten Fachteilerstangen 18 auf einen der Zapfen 22 aufgesteckt.

Dadurch sind die ersten und zweiten Fachteilerstangen 16;18 fest, aber lösbar, miteinander verbunden.

Vorteil der erfindungsgemäßen zusätzlichen zweiten Fachteilerstangen 19 ist, dass diese für eine zusätzliche seitliche Führung der Glastafeln beim Einführen in die erfindungsgemäße Speichereinrichtung 1 dienen. Die Fächer 15 werden durch die zweiten Fachteilerstangen 19 derart zusätzlich seitlich begrenzt, dass die Fächer 15 in Beladerichtung 2a durchgehend seitlich begrenzt sind. Dadurch können die Glastafeln nicht in das benachbarte Fach 15 springen.

Zudem sind die zweiten Fachteilerstangen auch problemlos nachträglich einbaubar, sofern die Kunststoffröhrchen an den ersten Fachteilerstangen den erforderlichen Freiraum durch Verschieben zulassen. Denn dann können die Kunststoffclipse einfach in den Freiraum zwischen zwei Kunststoffröhrchen eingeclipst werden.

Im Rahmen der Erfindung liegt es dabei auch, dass es sich bei der Speichereinrichtung 1 nicht um eine verfahrbare Speichereinrichtung 1, sondern um eine stationäre Speichereinrichtung 1 handelt.

Im Rahmen der Erfindung liegt es zudem auch, dass anstelle der Fachteilerstangen 16;19 Fachteilerseile, vorzugsweise aus Metall, bevorzugt aus Stahl, oder andere längliche erste bzw. zweite Fachbegrenzungselemente bzw. Fachteilerelemente 28;29 verwendet werden. Zudem weisen die Fachteilerelemente 28;29 erfindungsgemäß einen runden Querschnitt auf.

Zudem liegt es im Rahmen der Erfindung, dass anstelle der Kunststoffclipse Clipse aus anderem Material verwendet werden. Die Clipse bestehen dann vorzugsweise aus Metall. Insbesondere handelt es sich dann um, bevorzugt gepresste Blechteile, oder um Gussteile, insbesondere Druckgussteile.

Des Weiteren können die beiden Clipshälften auch, insbesondere einendig, miteinander unlösbar verbunden sein, so dass die Clipse zwar zweiteilig aber nicht mehrstückig sondern einstückig ausgebildet sind. Beispielsweise sind die beiden Clipshälften dann scharnierend miteinander verbunden. Oder die Clipse sind einseitig offen bzw. geschlitzt ausgebildet.

Sie werden dann bei der Montage um die ersten Fachteilerelemente herum gelegt bzw. die ersten Fachteilerelemente werden in die Clipse durch den Schlitz eingeschoben und die jeweils freien Enden der Clipshälften werden vorzugsweise miteinander, insbesondere lösbar, verbunden. Bei der lösbaren Verbindung handelt es sich wiederum vorzugsweise um eine Steckverbindung und/oder eine Rastverbindung, insbesondere um eine wie oben für die beiden lösbar miteinander verbundenen Clipshälften beschriebene Verbindung. Insbesondere bei den geschlitzen Clipsen kann es aber auch ausreichen, die Clipse lediglich über die ersten Fachteilerelemente zu schieben. Da sie dabei elastisch verformt werden, können sie auch ohne weitere Verbindung der Clipshälften miteinander klemmend an den ersten Fachteilerelementen halten.

Auch kann die indirekte lösbare Verbindung der zweiten Fachteilerelemente mit den ersten Fachteilerelementen mittels anderer zusätzlicher Verbindungselemente erfolgen.

Aufgrund der Verbindungelemente wird, wie bereits erläutert, die nachträgliche Verbindung der zweiten Fachteilerelemente mit den ersten Fachteilerelementen möglich. Nachträglich meint dabei, dass die zweiten Fachteilerelemente nach - abgesehen von der Montage der zweiten Fachteileelemente - vollständiger Montage der Speichereinrichtung eingebaut werden können. Dadurch ist eine Nachrüstung bestehender Speichereinrichtungen, welche lediglich die ersten Fachteilerelemente aufweisen, möglich.

Denn aufgrund der Verbindungselemente müssen die ersten Fachteilerelemente nicht verändert bzw. bearbeitet werden, sondern können unverändert bleiben. Die ersten Fachteilerelemente weisen somit insbesondere keine Verbindungsmittel zur Verbindung mit den zweiten Fachteilerelementen auf.

## Patentansprüche

1. Speichereinrichtung (1), insbesondere Fächerwagen (2), zum Speichern von Glastafeln, bevorzugt von Verbundglastafeln oder Einscheiben-Sicherheitsglas-Tafeln, wobei die Speichereinrichtung (1) einen Beladeraum (4) und mehrere in eine Beladerichtung (2a) der Speichereinrichtung (1) hintereinander angeordnete Fächerrahmen (8) aufweist, die den Beladeraum (4) in einzelne, in eine Breitenrichtung (2b) der Speichereinrichtung (1) zueinander benachbarte und zueinander parallele Fächer (15) zur Aufnahme jeweils einer Glastafel unterteilt, wobei die Fächerrahmen (8) zur Unterteilung der Fächer (15) jeweils mehrere erste längliche Fachteilerelemente (28), bevorzugt Fachteilerstangen (16) und/oder Fachteilerseile, aufweisen, die in Breitenrichtung (2b) zueinander benachbart und voneinander beabstandet sind,
wobei die Speichereinrichtung (1) mehrere zweite, die Fächer (15) zusätzlich zu den ersten Fachteilerelementen (28;16) seitlich begrenzende, längliche Fachteilerelemente (29), bevorzugt Fachteilerstangen (19) und/oder Fachteilerseile, aufweist,
**dadurch gekennzeichnet, dass**
sich die zweiten Fachteilerstangen (29;19) jeweils zwischen zwei ersten Fachteilerelementen (28;16) zweier hintereinander angeordneter Fächerrahmen (8) erstrecken,
die Fachteilerelemente (28;29) einen runden Querschnitt aufweisen, und
die ersten Fachteilerelemente (28;16) zur Vertikalen geneigt sind, wobei sie um einen Neigungswinkel α zur Rückseite (5b) hin oder von dieser weg geneigt sind, wobei vorzugsweise der Neigungswinkel α ≤ 45°, bevorzugt ≤ 20°, besonders bevorzugt ≤ 10°, beträgt.

2. Speichereinrichtung (1) nach Anspruch 1,
**dadurch gekennzeichnet, dass**
sich die zweiten Fachteilerelemente (29;19) jeweils von einem ersten Fachteilerelement (28;16) des einen Fächerrahmens (8) zu einem ersten Fachteilerelement (28;16) des dahinter angeordneten Fächerrahmens (8) erstrecken.

3. Speichereinrichtung (1) nach Anspruch 1 oder 2,
**dadurch gekennzeichnet, dass**
die Speichereinrichtung (1) die Beladerichtung (2a), die dazu senkrechte, horizontale Breitenrichtung (2b) und eine zur Beladerichtung (2a) und zur Breitenrichtung (2b) senkrechte Höhenrichtung (2c) und vorzugsweise eine Beladeseite (5a) sowie eine dieser in Beladerichtung (2a) gegenüberliegende Rückseite (5b) aufweist,
wobei vorzugsweise die Fächerrahmen (8) in Beladerichtung (2a) hintereinander und voneinander beabstandet angeordnet sind.

4. Speichereinrichtung (1) nach Anspruch 3,
**dadurch gekennzeichnet, dass**
die zueinander in Breitenrichtung (2b) benachbarten Fächer (15) zur Beladeseite (5a) der Speichereinrichtung (1) hin und vorzugsweise auch zur Rückseite (5b) der Speichereinrichtung (1) hin offen sind.

5. Speichereinrichtung (1) nach Anspruch 3 oder 4,
**dadurch gekennzeichnet, dass**
die ersten Fachteilerelemente (28;16) der einzelnen hintereinander angeordneten Fächerrahmen (8) derart in Beladerichtung (2a) zueinander fluchtend angeordnet sind, dass sie die einzelnen Fächer (15) seitlich begrenzen,
wobei vorzugsweise jedes erste Fachteilerelement (28;16) eines Fächerrahmens (8) mit den dazu in Beladerichtung (2a) fluchtend angeordneten ersten Fachteilerelementen (28;16) der anderen Fächerrahmen (8) jeweils einseitig ein Fach (15) begrenzt.

6. Speichereinrichtung (1) nach Anspruch 5,
**dadurch gekennzeichnet, dass**
jedes erste Fachteilerelement (28;16) eines Fächerrahmens (8) mit den dazu in Beladerichtung (2a) zueinander fluchtend angeordneten ersten Fachteilerelementen (28;16) der anderen Fächerrahmen (8) eine erste Elementreihe, bevorzugt Stangenreihe (17), bildet, wobei jede erste Elementreihe, bevorzugt Stangenreihe (17), jeweils einseitig ein Fach (15) begrenzt,
wobei sich die zweiten Fachteilerelemente (29;19) vorzugsweise von dem einen ersten Fachteilerelement (28;16) zu dem dazu in Beladerichtung (2a) direkt benachbart und fluchtend angeordneten anderen ersten Fachteilerelement (28;16) derselben Stangenreihe (17) erstrecken.

7. Speichereinrichtung (1) nach einem der vorhergehenden Ansprüche,
**dadurch gekennzeichnet, dass**
a) sich die zweiten Fachteilerelemente (29;19) horizontal erstrecken oder zur Horizontalen um einen Neigungswinkel geneigt sind, wobei der Neigungswinkel vorzugsweise ≤ 5°, bevorzugt ≤ 3°, besonders bevorzugt ≤ 1°, beträgt,
und/oder
b) die zweiten Fachteilerelemente (29;19), die zwischen denselben Fächerrahmen (8) angeordnet sind, in Breitenrichtung (2b) zueinander benachbart und vorzugsweise auch zueinander fluchtend angeordnet sind,
und/oder
c) die ersten Fachteilerelemente (28;16) um einen zweiten Neigungswinkel zu einer Seite des Fächerwagens (2) hin geneigt sind, wobei der zweite Neigungswinkel vorzugsweise ≤ 7°, bevorzugt ≤ 5°, besonders bevorzugt ≤ 2°, beträgt.

8. Speichereinrichtung (1) nach einem der vorhergehenden Ansprüche,
**dadurch gekennzeichnet, dass**
a) die Fächerrahmen (8) jeweils zwei aufrechte Rahmenlängsbalken (13) sowie einen unteren und einen oberen Rahmenquerbalken (14) aufweisen, wobei die Rahmenquerbalken (14) vorzugsweise parallel zur Breitenrichtung (2b) sind, und wobei sich die ersten Fachteilerelemente (16) von dem unteren Rahmenquerbalken (14) aus zum oberen Rahmenquerbalken (14) hin erstrecken,
und/oder
b) die zweiten Fachteilerelemente (29;19) zwischen dem unteren Rahmenquerbalken (14) und dem oberen Rahmenquerbalken (14) angeordnet sind und von dem unteren Rahmenquerbalken (14) und dem oberen Rahmenquerbalken (14) beabstandet sind,
und/oder
c) die Speichereinrichtung (1) Fördermittel, vorzugsweise Rollenbahnen oder Transportbänder, zum Transport der plattenförmigen Elemente aufweist.

9. Speichereinrichtung (1) nach einem der vorhergehenden Ansprüche,
**dadurch gekennzeichnet, dass**
a) die Fächerrahmen (8) Kunststoffröhrchen (18) aufweisen, die um die ersten Fachteilerelemente (28;16) herum angeordnet sind und vorzugsweise um diese herum frei drehbar sind, wobei vorzugsweise die zweiten Fachteilerelemente (29;19) einen geringeren Außendurchmesser als die Kunststoffröhrchen (18) aufweisen,
und/oder
b) die Fachbreite der Fächer (15) 8 bis 30 mm, bevorzugt 13 bis 24 mm, beträgt.

10. Speichereinrichtung (1) nach einem der vorhergehenden Ansprüche,
**dadurch gekennzeichnet, dass**
a) die ersten Fachteilerelemente (28;16) und/oder die zweiten Fachteilerelemente (29;19) aus Metall, bevorzugt aus Edelstahl, bestehen, und/oder
b) es sich bei den ersten Fachteilerstangen (16) und/oder den zweiten Fachteilerstangen (19) um Rohre handelt.

11. Speichereinrichtung (1) nach einem der vorhergehenden Ansprüche,
**dadurch gekennzeichnet, dass**
a) die zweiten Fachteilerelemente (29;19) lösbar, insbesondere mittels Verbindungselementen, mit den ersten Fachteilerelementen (28;16) verbunden sind,
und/oder
b) die zweiten Fachteilerelemente (29;19) nachträglich einbaubar sind, insbesondere nachträglich mit den ersten Fachteilerelementen (28;16) lösbar verbindbar sind.

12. Speichereinrichtung (1) nach Anspruch 11,
**dadurch gekennzeichnet, dass**
a) die Verbindungselemente jeweils lösbar mit einem der ersten Fachteilerelemente (28;16) verbunden sind und die zweiten Fachteilerelemente (29;19) jeweils lösbar mit einem der Verbindungselemente verbunden sind,
und/oder
b) die Verbindungselemente, bevorzugt klemmend, um die ersten Fachteilerelemente (28;16) angeordnet sind und vorzugsweise die zweiten Fachteilerelemente (29;19) mit den Verbindungselementen durch eine Steckverbindung und/oder eine Rastverbindung, verbunden sind,
und/oder
c) die Verbindungselemente mehrstückig oder einstückig ausgebildet sind.

13. Speichereinrichtung (1) nach Anspruch 11 oder 12,
**dadurch gekennzeichnet, dass**
es sich bei den Verbindungselementen um Clipse, bevorzugt Kunststoffclipse (20) oder Clipse aus Metall, handelt,
wobei die Clipse vorzugsweise zweiteilig ausgebildet sind und jeweils eine erste und eine zweite Clipshälfte (20a;b) aufweisen, wobei die beiden Clipshälften (20a;b) um die ersten Fachteilerelemente (28;16) herum angeordnet sind und miteinander verbunden sind, bevorzugt durch eine Steckverbindung und/oder eine Rastverbindung,
wobei die beiden Clipshälften (20a;b) vorzugsweise zumindest einendig miteinander verbunden sind.

14. Glasverarbeitungsanlage zum Verarbeiten von Glastafeln, vorzugsweise von Verbundglastafeln oder Einscheiben-Sicherheitsglas-Tafeln, bevorzugt Schneidanlage zum Schneiden von Glastafeln, bevorzugt Verbundglastafeln oder Einscheiben-Sicherheitsglas-Tafeln, in einzelne Glastafelzuschnitte,
**dadurch gekennzeichnet, dass**
die Glasverarbeitungsanlage zumindest eine Speichereinrichtung (1) nach einem der vorhergehenden Ansprüche aufweist.

15. Verwendung einer Speichereinrichtung (1) nach einem der Ansprüche 1 bis 13 zum Speichern von Glastafeln, vorzugsweise von Verbundglastafeln und/oder Einscheiben-Sicherheitsglas-Tafeln.

## Claims

1. A storage device (1), in particular a harp rack (2), for storing glass sheets, preferably laminated glass sheets or single-pane safety glass sheets, the storage device (1) comprising a loading space (4) and a plurality of compartment frames (8) situated one after the other in a loading direction (2a) of the storage device (1), which frames divides the loading space (4) into individual compartments (15), situated adjacent to one another and parallel to one another in a width direction (2b) of the storage device (1), for the respective accommodation of a glass sheet, the compartment frames (8) each comprising, for the division of the compartments (15), a plurality of first elongated compartment divider elements (28), preferably compartment divider rods (16) and/or compartment divider cables, that are adjacent to one another and at a distance from one another in the width direction (2b),
wherein the storage device (1) comprises a plurality of second elongated compartment divider elements (29), preferably compartment divider rods (19) and/or compartment divider cables, that in addition to the first compartment divider elements (28;16) laterally bound the compartments (15),
**characterized in that**
the second compartment divider rods (29;19) each extend between two first compartment divider elements (28; 16) of two compartment frames (8) situated one after the other, the compartment divider elements (28;29) have a circular crosssection and the first compartment divider elements (28;16) being inclined relative to the vertical, wherein they are inclined by an angle of inclination α towards the rear side (5b) or away from it, wherein the angle of inclination α preferably is ≤ 45°, preferably ≤ 20°, particularly preferably ≤ 10°.

2. The storage device (1) according to Claim 1,
**characterized in that**
the second compartment divider elements (29;19) each extend from a first compartment divider element (28;16) of the one compartment frame (8) to a first compartment divider element (28;16) of the compartment frame (8) situated behind it.

3. The storage device (1) according to Claim 1 or 2,
**characterized in that**
the storage device (1) comprises the loading direction (2a), the horizontal width direction (2b) perpendicular to the loading direction, and a height direction (2c) perpendicular to the loading direction (2a) and to the width direction (2b), and preferably comprises a loading side (5a) as well as a rear side (5b) situated opposite the loading side in the loading direction (2a),
wherein preferably the compartment frames (8) are situated one after the other and at a distance from one another in the loading direction (2a).

4. The storage device (1) according to Claim 3,
**characterized in that**
the compartments (15) adjacent to one another in the width direction (2b) are open towards the loading side (5a) of the storage device (1) and preferably also towards the rear side (5b) of the storage device (1).

5. The storage device (1) according to Claim 3 or 4,
**characterized in that**
the first compartment divider elements (28;16) of the individual compartment frames (8) situated one after the other are configured in alignment with one another in the loading direction (2a) in such a way that they laterally bound the individual compartments (15),
wherein preferably each first compartment divider element (28;16) of a compartment frame (8), together with the first compartment divider elements (28;16), configured in alignment therewith in the loading direction (2a), of the other compartment frames (8), respectively bounds a compartment (15) at one side.

6. The storage compartment (1) according to Claim 5,
**characterized in that**
each first compartment divider element (28;16) of a compartment frame (8) forms, together with the first compartment divider elements (28;16), configured in alignment therewith in the loading direction (2a), of the other compartment frames (8), a first row of elements, preferably a row of rods (17), each first row of elements, preferably row of rods (17), respectively bounding a compartment (15) at one side, wherein the second compartment divider elements (29;19) preferably extend from the one first compartment divider element (28;16) to the other first compartment divider element (28;16), directly adjacent to and in alignment with the one first divider element in the loading direction (2a), of the same row of rods (17).

7. The storage device (1) according to one of the preceding claims,
**characterized in that**
a) the second compartment divider elements (29;19) extend horizontally or with an inclination by an angle of inclination relative to the horizontal, the angle of inclination preferably being ≤ 5°, preferably ≤ 3°, particularly preferably ≤ 1°,
and/or
b) the second compartment divider elements (29;19) that are situated between the same compartment frames (8) are configured adjacent to one another and preferably also in alignment with one another in the width direction (2b),
and/or
c) the first compartment divider elements (28;16) being inclined by a second angle of inclination towards one side of the harp rack (2), the second angle of inclination preferably being ≤ 7°, preferably ≤ 5°, particularly preferably ≤ 2°.

8. The storage device (1) according to one of the preceding claims,
**characterized in that**
a) the compartment frames (8) each comprise two upright frame longitudinal beams (13) as well as a lower and an upper frame crossbeam (14), the frame crossbeams (14) preferably being parallel to the width direction (2b), and the first compartment divider elements (16) extending from the lower frame crossbeam (14) to the upper frame crossbeam (14),
and/or
b) the second compartment divider elements (29;19) are situated between the lower frame crossbeam (14) and the upper frame crossbeam (14), and are at a distance from the lower frame crossbeam (14) and from the upper frame crossbeam (14),
and/or
c) the storage device (1) comprises conveying means, preferably roller conveyors or conveyor belts, for transporting the plate-shaped elements.

9. The storage device (1) according to one of the preceding claims,
**characterized in that**
a) the compartment frames (8) comprise plastic small tubes (18) that are situated around the first compartment divider elements (28;16) and are preferably freely rotatable about them, the second compartment divider elements (29;19) preferably having a smaller outer diameter than do the plastic small tubes (18),
and/or
b) the width of the compartments (15) is from 8 to 30 mm, preferably from 13 to 24 mm.

10. The storage device (1) according to one of the preceding claims, **characterized in that**
a) the first compartment divider elements (28;16) and/or the second compartment divider elements (29;19) are made of metal, preferably of stainless steel,
and/or
b) the first compartment divider rods (16) and/or the second compartment divider rods (19) are tubes.

11. The storage device (1) according to one of the preceding claims,
**characterized in that**
a) the second compartment divider elements (29;19) are detachably connected to the first compartment divider elements (28;16), in particular by connecting elements,
and/or
b) the second compartment divider elements (29;19) are capable of being installed subsequently, in particular are capable of being subsequently detachably connected to the first compartment divider elements (28;16).

12. The storage device (1) according to Claim 11,
**characterized in that**
a) the connecting elements are each detachably connected to one of the first compartment divider elements (28;16), and the second compartment divider elements (29;19) are each detachably connected to one of the connecting elements,
and/or
b) the connecting elements are situated around the first compartment divider elements (28;16), preferably in clamping fashion, and preferably the second compartment divider elements (29;19) are connected to the connecting elements by a plug connection and/or a snap-on connection,
and/or
c) the connecting elements are fashioned in multiple pieces or in one piece.

13. The storage device (1) according to Claim 11 or 12,
**characterized in that**
the connecting elements are clips, preferably plastic clips (20) or clips made of metal wherein the clips preferably are fashioned in two parts, and each comprise a first and a second clip half (20a;b), the two clip halves (20a;b) being situated around the first compartment divider elements (28; 16) and connected to one another, preferably by a plug connection and/or a snap-on connection,
wherein the two clip halves (20a;b) preferably are connected to one another at least at one end.

14. A glass processing installation for processing glass sheets, preferably laminated glass sheets or single-pane safety glass sheets, preferably a cutting installation for cutting glass sheets, preferably laminated glass sheets or single-pane safety glass sheets, into individual glass sheet cuts,
**characterized in that**
the glass processing installation comprises at least one storage device (1) according to one of the preceding claims.

15. Use of a storage device (1) according one to of the claims 1 to 13 for storing glass sheets, preferably laminated glass sheets and/or single-pane safety glass sheets.

## Revendications

1. Dispositif de stockage (1), en particulier chariot à compartiments (2), pour le stockage de plaques de verre, de préférence de plaques de verre feuilleté ou plaques de verre de sécurité trempé, dans lequel le dispositif de stockage (1) présente un espace de chargement (4) et plusieurs cadres de compartiment (8) agencés les uns derrière les autres dans un sens de chargement (2a) du dispositif de stockage (1) qui divise l'espace de chargement (4) en compartiments (15) individuels contigus dans un sens de la largeur (2b) du dispositif de stockage (1) l'un à l'autre et parallèles l'un à l'autre pour la réception respectivement d'une plaque de verre, dans lequel les cadres de compartiment (8) présentent pour la division des compartiments (15) respectivement plusieurs premiers éléments séparateurs de compartiment (28) oblongs, de préférence des tiges de séparateur de compartiment (16) et/ou câbles de séparateur de compartiment qui sont contigus dans le sens de la largeur (2b) l'un à l'autre et espacés l'un de l'autre,
dans lequel le dispositif de stockage (1) présente plusieurs seconds éléments séparateurs de compartiment (29) oblongs, délimitant latéralement les compartiments (15) outre les premiers éléments séparateurs de compartiment (28; 16), de préférence des tiges de séparateur de compartiment (19) et/ou câbles de séparateur de compartiment,
**caractérisé en ce que**
les secondes tiges de séparateur de compartiment (29; 19) s'étendent respectivement entre deux premiers éléments séparateurs de compartiment (28; 16) de deux cadres de compartiment (8) agencés l'un derrière l'autre,
les éléments séparateurs de compartiment (28 ; 29) présentent une section transversale ronde, et
les premiers éléments séparateurs de compartiment (28; 16) sont inclinés à la verticale, dans lequel ils sont inclinés d'un angle d'inclinaison α vers le côté arrière (5b) ou loin de celui-ci, dans lequel de préférence l'angle d'inclinaison est α ≤ 45°, de préférence ≤ 20°, de manière particulièrement préférée ≤ 10°.

2. Dispositif de stockage (1) selon la revendication 1,
**caractérisé en ce que**
les seconds éléments séparateurs de compartiment (29; 19) s'étendent respectivement depuis un premier élément séparateur de compartiment (28 ; 16) d'un cadre de compartiment (8) à un premier élément séparateur de compartiment (28 ; 16) du cadre de compartiment (8) agencé derrière.

3. Dispositif de stockage (1) selon la revendication 1 ou 2,
**caractérisé en ce que**
le dispositif de stockage (1) présente le sens de chargement (2a), le sens de la largeur (2b) horizontal, perpendiculaire à celui-ci et un sens vertical (2c) perpendiculaire au sens de chargement (2a) et au sens de la largeur (2b) et de préférence un côté de chargement (5a) ainsi qu'un côté arrière (5b) opposé à celui-ci dans le sens de chargement (2a),
dans lequel de préférence les cadres de compartiment (8) sont agencés dans le sens de chargement (2a) les uns derrière les autres et à distance les uns des autres.

4. Dispositif de stockage (1) selon la revendication 3,
**caractérisé en ce que**
les compartiments (15) contigus les uns aux autres dans le sens de la largeur (2b) sont ouverts vers le côté de chargement (5a) du dispositif de stockage (1) et de préférence aussi vers le côté arrière (5b) du dispositif de stockage (1).

5. Dispositif de stockage (1) selon la revendication 3 ou 4,
**caractérisé en ce que**
les premiers éléments séparateurs de compartiment (28; 16) des cadres de compartiment (8) individuels agencés les uns derrière les autres sont agencés dans le sens de chargement (2a) s'alignant les uns sur les autres de telle manière qu'ils délimitent latéralement les compartiments (15) individuels,
dans lequel de préférence chaque premier élément séparateur de compartiment (28; 16) d'un cadre de compartiment (8) délimite avec les premiers éléments séparateurs de compartiment (28 ; 16) agencés s'alignant de plus dans le sens de chargement (2a) des autres cadres de compartiment (8) respectivement d'un côté un compartiment (15).

6. Dispositif de stockage (1) selon la revendication 5,
**caractérisé en ce que**
chaque premier élément séparateur de compartiment (28; 16) d'un cadre de compartiment (8) forme avec les premiers éléments séparateurs de compartiment (28 ; 16) agencés s'alignant les uns sur les autres dans le sens de chargement (2a) de plus des autres cadres de compartiment (8) une première rangée d'éléments, de préférence rangée de tiges (17), dans lequel chaque première rangée d'éléments, de préférence rangée de tiges (17) délimite respectivement d'un côté un compartiment (15),
dans lequel les seconds éléments séparateurs de compartiment (29 ; 19) s'étendent de préférence depuis l'un premier élément séparateur de compartiment (28 ; 16) à l'autre premier élément séparateur de compartiment (28 ; 16) agencé s'alignant et directement contigu de plus dans le sens de chargement (2a) de la même rangée de tiges (17).

7. Dispositif de stockage (1) selon l'une quelconque des revendications précédentes,
**caractérisé en ce que**
a) les seconds éléments séparateurs de compartiment (29; 19) s'étendent horizontalement ou sont inclinés à l'horizontale d'un angle d'inclinaison, dans lequel l'angle d'inclinaison s'élève de préférence ≤5°, de préférence ≤3°, de manière particulièrement préférée ≤1°,
et/ou
b) les seconds éléments séparateurs de compartiment (29; 19) qui sont agencés entre les mêmes cadres de compartiment (8), sont agencés de manière contigüe dans le sens de la largeur (2b) l'un à l'autre et s'alignant de préférence aussi l'un sur l'autre,
et/ou
c) les premiers éléments séparateurs de compartiment (28 ; 16) sont inclinés d'un second angle d'inclinaison vers un côté du chariot à compartiments (2), dans lequel le second angle d'inclinaison s'élève de préférence ≤7°, de préférence ≤5°, de manière particulièrement préférée ≤2°.

8. Dispositif de stockage (1) selon l'une quelconque des revendications précédentes,
**caractérisé en ce que**
a) les cadres de compartiment (8) présentent respectivement deux barres longitudinales de cadre (13) verticales ainsi qu'une barre transversale de cadre (14) inférieure et supérieure, dans lequel les barres transversales de cadre (14) sont de préférence parallèles au sens de la largeur (2b), et dans lequel les premiers éléments séparateurs de compartiment (16) s'étendent depuis la barre transversale de cadre (14) inférieure vers la barre transversale de cadre (14) supérieure,
et/ou
b) les seconds éléments séparateurs de compartiment (29 ; 19) sont agencés entre la barre transversale de cadre (14) inférieure et la barre transversale de cadre (14) supérieure et sont espacés de la barre transversale de cadre (14) inférieure et la barre transversale de cadre (14) supérieure,
et/ou
c) le dispositif de stockage (1) présente des moyens de transport, de préférence des transporteurs à rouleaux ou transporteurs à bandes, pour le transport des éléments en forme de plaque.

9. Dispositif de stockage (1) selon l'une quelconque des revendications précédentes,
**caractérisé en ce que**
a) les cadres de compartiment (8) présentent des petits tubes en matière plastique (18) qui sont agencés autour des premiers éléments séparateurs de compartiment (28 ; 16) et sont rotatifs de préférence autour de ceux-ci librement, dans lequel de préférence les seconds éléments séparateurs de compartiment (29 ; 19) présentent un diamètre extérieur plus faible que les petits tubes en matière plastique (18),
et/ou
b) la largeur des compartiments (15) est comprise entre 8 et 30 mm, de préférence 13 et 24 mm.

10. Dispositif de stockage (1) selon l'une quelconque des revendications précédentes,
**caractérisé en ce que**
a) les premiers éléments séparateurs de compartiment (28 ; 16) et/ou les seconds éléments séparateurs de compartiment (29 ; 19) se composent de métal, de préférence d'acier spécial, et/ou
b) il s'agit de tubes pour les premières tiges de séparateurs de compartiment (16) et/ou les secondes tiges de séparateurs de compartiment (19).

11. Dispositif de stockage (1) selon l'une quelconque des revendications précédentes,
**caractérisé en ce que**
a) les seconds éléments séparateurs de compartiment (29 ; 19) sont reliés de manière amovible, en particulier au moyen d'éléments de liaison, aux premiers éléments séparateurs de compartiment (28 ; 16),
et/ou
b) les seconds éléments séparateurs de compartiment (29; 19) peuvent être installés ultérieurement, en particulier peuvent être reliés de manière amovible ultérieurement aux premiers éléments séparateurs de compartiment (28 ; 16).

12. Dispositif de stockage (1) selon la revendication 11,
**caractérisé en ce que**
a) les éléments de liaison sont reliés respectivement de manière amovible à un des premiers éléments séparateurs de compartiment (28 ; 16) et les seconds éléments séparateurs de compartiment (29 ; 19) sont reliés respectivement de manière amovible à un des éléments de liaison,
et/ou
b) les éléments de liaison sont agencés de préférence par serrage autour des premiers éléments séparateurs de compartiment (28 ; 16) et de préférence les seconds éléments séparateurs de compartiment (29 ; 19) sont reliés aux éléments de liaison par une liaison d'enfichage et/ou une liaison d'encliquetage,
et/ou
c) les éléments de liaison sont réalisés en plusieurs pièces ou en une seule pièce.

13. Dispositif de stockage (1) selon la revendication 11 ou 12,
**caractérisé en ce que**
il s'agit pour les éléments de liaison de clips, de préférence clips en matière plastique (20) ou clips en métal,
dans lequel les clips sont réalisés de préférence en deux parties et présentent respectivement une première et une seconde moitié de clips (20a ; b), dans lequel les deux moitiés de clips (20a ; b) sont agencées autour des premiers éléments séparateurs de compartiment (28; 16) et sont reliées entre elles, de préférence par une liaison d'enfichage et/ou une liaison d'encliquetage,
dans lequel les deux moitiés de clips (20a ; b) sont reliées entre elles de préférence au moins à une extrémité.

14. Installation de traitement de verre pour le traitement de plaques de verre, de préférence de plaque de verre feuilleté ou plaques de verre de sécurité trempé, de préférence installation de coupe pour la coupe de plaques de verre, de préférence plaques de verre feuilleté ou plaques de verre de sécurité trempé, en découpes de plaque de verre individuelles,
**caractérisée en ce que**
l'installation de traitement de verre présente au moins un dispositif de stockage (1) selon l'une quelconque des revendications précédentes.

15. Utilisation d'un dispositif de stockage (1) selon l'une quelconque des revendications 1 à 13 pour le stockage de plaques de verre, de préférence de plaques de verre feuilleté et/ou de plaques de verre de sécurité trempé.
